(19) Europäisches Patentamt
European Patent Office
Office européen des brevets

(11) EP 4 177 044 A1

(12) **EUROPEAN PATENT APPLICATION**
published in accordance with Art. 153(4) EPC

(43) Date of publication:
**10.05.2023 Bulletin 2023/19**

(21) Application number: **21832298.0**

(22) Date of filing: **30.06.2021**

(51) International Patent Classification (IPC):
***B29C 64/40** (2017.01)* ***B33Y 70/00** (2020.01)*

(52) Cooperative Patent Classification (CPC):
**B29C 64/40; B33Y 70/00**

(86) International application number:
**PCT/JP2021/024672**

(87) International publication number:
**WO 2022/004764 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.07.2020 JP 2020114271**

(71) Applicant: **Kao Corporation**
**Chuo-ku**
**Tokyo 103-8210 (JP)**

(72) Inventor: **KUBOTA, Kazuo**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **THREE-DIMENSIONAL OBJECT PRECURSOR TREATMENT AGENT COMPOSITION**

(57) The present invention is a three-dimensional object precursor treatment agent composition configured to remove a water-soluble support material from a three-dimensional object precursor that includes a three-dimensional object containing a resin, and the water-soluble support material, the three-dimensional object precursor treatment agent composition containing a compound (component A) represented by Formula (I) below, an anionic surfactant (component B), and water (component C), and the component B including an alkyl group having 6 or more and 20 or less carbon atoms, and an acidic group. The present invention can provide: a three-dimensional object precursor treatment agent composition capable of removing a water-soluble support material while inhibiting damage to a three-dimensional object and discoloration of the three-dimensional object caused by such damage; a method for manufacturing a three-dimensional object; a method for removing a support material; and a method for inhibiting damage to a three-dimensional object.

[Formula 1]

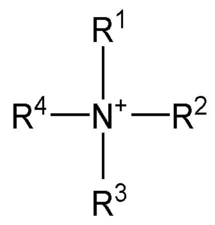

(I)

(In Formula (I), R1, R2, R3, and R4 each independently represent a hydrocarbon group.)

EP 4 177 044 A1

## Description

TECHNICAL FIELD

The present invention relates to a three-dimensional object precursor treatment agent composition.

BACKGROUND ART

Three-D printers are a type of technique for rapid prototyping and are three-dimensional printers that model a three-dimensional object on the basis of 3D data of 3D CAD, 3D CG, or the like. As systems of the 3D printers, there have been known a fused deposition modeling system (hereinafter, also referred to as an FDM system), an inkjet ultraviolet curing system, a stereolithography system, and a laser sintering system. Among these systems, the FDM system is a modeling system of heat-melting, extruding, and laminating polymer filaments to obtain a three-dimensional object, and does not use a reaction of a material unlike the other systems. Therefore, FDM 3D printers are small and inexpensive, and have become popular in recent years as apparatuses with less post-processing. In order to model a more complicatedly shaped three-dimensional object by the FDM system, a modeling material constituting a three-dimensional object and a support material for supporting the three-dimensional structure of the modeling material are laminated to obtain a three-dimensional object precursor, and thereafter the support material is removed from the three-dimensional object precursor to obtain a target three-dimensional object.

As a method for removing a support material from a three-dimensional object precursor, there is a method for using a water-soluble support material and treating a three-dimensional object precursor with a water-based treatment agent composition (e.g., JP-A-2020-82519). JP-A-2020-82519 discloses a method for soaking a three-dimensional object precursor in a three-dimensional object precursor treatment agent composition containing a compound derived from a specific quaternary ammonium salt, the three-dimensional object precursor including a three-dimensional object and a support material that contains a (meth)acrylic acid-based copolymer having a hydrophilic monomer and a hydrophobic monomer as monomer units.

JP-A-2019-116049 discloses a 3D printer support material removing composition containing a specific nonionic compound, as a technique for preventing discoloration, such as whitening, of a three-dimensional object when a water-soluble support material is removed from a three-dimensional object precursor. Further, JP-A-2019-116049 (Examples) indicates that an evaluation test piece, i.e., a three-dimensional model produced by an inkjet 3D printer, has been confirmed not to be whitened with use of a support material removing composition whose pH is adjusted to 7.0, but an evaluation test piece has been confirmed to be whitened with use of a support material removing composition (comparative example) having a pH of 14.0.

SUMMARY OF THE INVENTION

A three-dimensional object precursor treatment agent composition according to the present invention is configured to remove a water-soluble support material from a three-dimensional object precursor that includes a three-dimensional object containing a resin, and the water-soluble support material, the three-dimensional object precursor treatment agent composition containing a compound (component A) represented by Formula (I) below, an anionic surfactant (component B), and water (component C), and the component B including an alkyl group having 6 or more and 20 or less carbon atoms, and an acidic group.

[Formula 1]

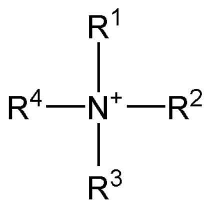

(I)

(In Formula (I), $R^1$, $R^2$, $R^3$, and $R^4$ each independently represent a hydrocarbon group.)

A method for manufacturing a three-dimensional object according to the present invention includes: a modeling step of obtaining a three-dimensional object precursor that includes a three-dimensional object containing a resin, and a water-soluble support material; and a support material removing step of contacting the three-dimensional object precursor with a three-dimensional object precursor treatment agent composition, and thus removing the water-soluble

support material, the three-dimensional object precursor treatment agent composition being the three-dimensional object precursor treatment agent composition described above.

A method for removing a support material according to the present invention includes contacting, with the three-dimensional object precursor treatment agent composition, a three-dimensional object precursor that includes a three-dimensional object containing a resin, and a water-soluble support material, and thus removing the support material.

A method for inhibiting damage to a three-dimensional object according to the present invention includes a damage inhibiting step of contacting, with a three-dimensional object damage inhibitor, a three-dimensional object containing a resin, the three-dimensional object damage inhibitor containing a compound (component A) represented by Formula (I), an anionic surfactant (component B), and water (component C).

MODE FOR CARRYING OUT THE INVENTION

As a support material used in FDM 3D printers, a water-soluble resin, such as a (meth)acrylic acid-based resin, which increases its solubility in water with alkaline is sometimes used as described in, for example, JP-A-2020-82519. While a treatment agent is adjusted to alkaline to increase the solubility of a support material, the treatment agent is required to inhibit damage to a three-dimensional object and discoloration of the three-dimensional object caused by such damage.

An object of the present invention is to provide: a three-dimensional object precursor treatment agent composition capable of removing a water-soluble support material while inhibiting damage to a three-dimensional object and discoloration of the three-dimensional object caused by such damage; a method for manufacturing a three-dimensional object; a method for removing a support material; and a method for inhibiting damage to a three-dimensional object.

A three-dimensional object precursor treatment agent composition according to the present invention is configured to remove a water-soluble support material from a three-dimensional object precursor that includes a three-dimensional object containing a resin, and the water-soluble support material, the three-dimensional object precursor treatment agent composition containing a compound (component A) represented by Formula (I) below, an anionic surfactant (component B), and water (component C), and the component B including an alkyl group having 6 or more and 20 or less carbon atoms, and an acidic group.

[Formula 2]

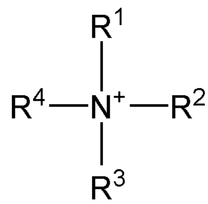

(I)

(In Formula (I), $R^1$, $R^2$, $R^3$, and $R^4$ each independently represent a hydrocarbon group.)

A method for manufacturing a three-dimensional object according to the present invention includes: a modeling step of obtaining a three-dimensional object precursor that includes a three-dimensional object containing a resin, and a water-soluble support material; and a support material removing step of contacting the three-dimensional object precursor with a three-dimensional object precursor treatment agent composition, and thus removing the water-soluble support material, the three-dimensional object precursor treatment agent composition being the three-dimensional object precursor treatment agent composition described above.

A method for removing a support material according to the present invention includes contacting, with the three-dimensional object precursor treatment agent composition, a three-dimensional object precursor that includes a three-dimensional object containing a resin, and a water-soluble support material, and thus removing the support material.

A method for inhibiting damage to a three-dimensional object according to the present invention includes a damage inhibiting step of contacting, with a three-dimensional object damage inhibitor, a three-dimensional object containing a resin, the three-dimensional object damage inhibitor containing a compound (component A) represented by Formula (I), an anionic surfactant (component B), and water (component C).

The present invention can provide: a three-dimensional object precursor treatment agent composition capable of removing a water-soluble support material while inhibiting damage to a three-dimensional object and discoloration of the three-dimensional object caused by such damage; a method for manufacturing a three-dimensional object; a method for removing a support material; and a method for inhibiting damage to a three-dimensional object.

Hereinafter, one embodiment of the present invention is described.

<Three-dimensional object precursor treatment agent composition>

A three-dimensional object precursor treatment agent composition (hereinafter, also simply referred to as a "treatment agent composition") according to the present embodiment is configured to remove a water-soluble support material from a three-dimensional object precursor that includes a three-dimensional object containing a resin, and the water-soluble support material, the three-dimensional object precursor treatment agent composition containing a compound (component A) represented by Formula (I) below, an anionic surfactant (component B), and water (component C), and the component B including an alkyl group having 6 or more and 20 or less carbon atoms, and an acidic group.

[Formula 3]

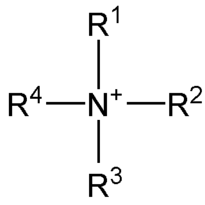

(I)

(In Formula (I), $R^1$, $R^2$, $R^3$, and $R^4$ each independently represent a hydrocarbon group.)

The treatment agent composition according to the present embodiment is capable of removing a water-soluble support material while inhibiting damage to a three-dimensional object and discoloration of the three-dimensional object caused by such damage. The effect exhibition mechanism of the treatment agent composition according to the present embodiment is not clear, but is considered as follows.

A hydrophobic group of the anionic surfactant (component B) contained in the treatment agent composition is adsorbed to the resin surface of the three-dimensional object and a hydrophilic group is oriented to a water system. It is considered that the compound (component A) represented by Formula (I) penetrates the resin of the three-dimensional object and thereby causes damage to the three-dimensional object, but the component A in which the total number of carbon atoms in $R^1$ and $R^2$ is within a prescribed range makes a cationic group of the component A electrostatically repulsive to the hydrophilic group, being restricted from the penetration into the resin of the three-dimensional object, and therefore the treatment agent composition can remove a water-soluble support material while inhibiting damage to the three-dimensional object and discoloration of the three-dimensional object caused by such damage.

[Compound (component A) represented by Formula (I)]

In order to smoothly remove the support material, any compound represented by Formula (I) below can be used as the component (A).

[Formula 4]

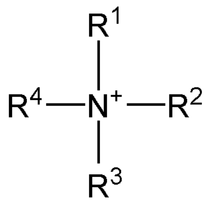

(I)

(In Formula (I), $R^1$, $R^2$, $R^3$, and $R^4$ each independently represent a hydrocarbon group.)

From the viewpoint of removing the water-soluble support material, both $R^1$ and $R^2$ of Formula (I) are preferably an alkyl group, and the total number of carbon atoms in $R^1$ and $R^2$ is preferably 7 or less, more preferably 6 or less, further preferably 5 or less. From the same viewpoint, the total number is preferably 2 or more.

From the viewpoint of removing the water-soluble support material, $R^3$ and $R^4$ of Formula (I) are each independently preferably a hydrocarbon group having 1 or more and 14 or less carbon atoms, preferably a hydrocarbon group having 1 or more and 12 or less carbon atoms, more preferably a hydrocarbon group having 1 or more and 10 or less carbon atoms. The hydrocarbon group may include a linear or branched alkyl group, or a ring structure such as a benzyl group or an adamantyl group.

Examples of the compound represented by Formula (I) include tetraethylammonium, tetrapropylammonium,

ethyltrimethylammonium, propyltrimethylammonium, butyltrimethylammonium, pentyltrimethylammonium, hexyltrimethylammonium, octyltrimethylammonium, benzyltrimethylammonium, benzyltriethylammonium, N,N,N-trimethyl-1-adamantylammonium, and N,N,N-triethyl-1-adamantylammonium. From the viewpoint of removing the water-soluble support material, preferred are tetraethylammonium, tetrapropylammonium, ethyltrimethylammonium, propyltrimethylammonium, butyltrimethylammonium, pentyltrimethylammonium, hexyltrimethylammonium, octyltrimethylammonium, benzyltrimethylammonium, and benzyltriethylammonium; more preferred are tetraethylammonium, tetrapropylammonium, ethyltrimethylammonium, propyltrimethylammonium, butyltrimethylammonium, benzyltrimethylammonium, and benzyltriethylammonium; further preferred are tetraethylammonium, tetrapropylammonium, benzyltrimethylammonium, and benzyltriethylammonium; and further preferred are tetraethylammonium, tetrapropylammonium, benzyltrimethylammonium, and benzyltriethylammonium. As the component A, at least one compound needs to be used, or two or more compounds can be used in combination.

From the viewpoint of removing the water-soluble support material, the content of the component A in the treatment agent composition is preferably 30 mmol/L or more, more preferably 50 mmol/L or more, further preferably 60 mmol/L or more, further preferably 70 mmol/L or more, further preferably 90 mmol/L or more. From the same viewpoint, the content is preferably 1000 mmol/L or less, more preferably 800 mmol/L or less, further preferably 500 mmol/L or less, further preferably 300 mmol/L or less, further preferably 150 mmol/L or less. The content is preferably 30 mmol/L or more and 1000 mmol/L or less, more preferably 50 mmol/L or more and 800 mmol/L or less, further preferably 60 mmol/L or more and 500 mmol/L or less, further preferably 70 mmol/L or more and 300 mmol/L or less, further preferably 90 mmol/L or more and 150 mmol/L or less.

[Compound (component A') of Formula (II)]

The origin of the component A is preferably a compound (component A') represented by Formula (II) below of a quaternary ammonium salt. The component A' that is ionic is inhibited from permeating into the modeling material due to charge repulsion on the surface of the modeling material to which the anionic compound has been adsorbed.

[Formula 5]

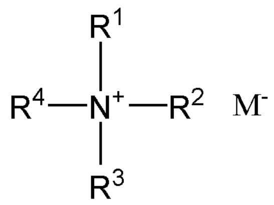

(II)

(In Formula (II), $R^1$, $R^2$, $R^3$, and $R^4$ each independently represent a hydrocarbon group and $M^-$ represents a hydroxide ion or an ion of a halogen atom.)

$R^1$, $R^2$, $R^3$, and $R^4$ in Formula (II) are respectively the same as $R^1$, $R^2$, $R^3$, and $R^4$ in Formula (I), and thus the description thereof is omitted.

In Formula (II), $M^-$ is a hydroxide ion or an ion of a halogen atom. From the viewpoint of removing the water-soluble support material, $M^-$ is preferably a hydroxide ion, a chloride ion, or a bromide ion. From the viewpoint of removing the water-soluble support material, when $M^-$includes an ion of a halogen atom in Formula (II), a hydroxide ion is preferably used in combination. $M^-$ may be contained in the treatment agent composition by adding a compound that is a counter ion to Formula (I) or by separately adding a compound including $M^-$.

Specific examples of the compound represented by Formula (II) include a hydroxide, a chloride, and a bromide of the compound represented by Formula (I). From the viewpoint of removing the water-soluble support material, preferred are tetraethylammonium hydroxide, tetraethylammonium chloride, tetraethylammonium bromide, tetrapropylammonium hydroxide, tetrapropylammonium chloride, tetrapropylammonium bromide, ethyltrimethylammonium hydroxide, ethyltrimethylammonium chloride, ethyltrimethylammonium bromide, propyltrimethylammonium hydroxide, propyltrimethylammonium chloride, butyltrimethylammonium hydroxide, butyltrimethylammonium chloride, pentyltrimethylammonium hydroxide, pentyltrimethylammonium chloride, hexyltrimethylammonium hydroxide, hexyltrimethylammonium chloride, octyltrimethylammonium hydroxide, octyltrimethylammonium chloride, benzyltrimethylammonium hydroxide, benzyltrimethylammonium chloride, benzyltriethylammonium hydroxide, benzyltriethylammonium chloride, N,N,N-trimethyl-1-adamantylammonium hydroxide, N,N,N-trimethyl-1-adamantylammonium chloride, N,N,N-triethyl-1-adamantylammonium hydroxide, and N,N,N-triethyl-1-adamantylammonium chloride; more preferred are tetraethylammonium hydroxide, tetraethylammonium chloride, tetraethylammonium bromide, tetrapropylammonium hydroxide, tetrapropylammonium

chloride, tetrapropylammonium bromide, benzyltrimethylammonium hydroxide, benzyltrimethylammonium chloride, benzyltriethylammonium hydroxide, benzyltriethylammonium chloride, N,N,N-trimethyl-1-adamantylammonium hydroxide, and N,N,N-trimethyl-1-adamantylammonium chloride; and further preferred are tetraethylammonium hydroxide, tetraethylammonium chloride, tetraethylammonium bromide, benzyltrimethylammonium hydroxide, benzyltrimethylammonium chloride, and benzyltrimethylammonium bromide. As the component A', at least one compound needs to be used, or two or more compounds can be used in combination.

From the viewpoint of removing the water-soluble support material, the content of the component A' in the treatment agent composition is preferably 30 mmol/L or more, more preferably 50 mmol/L or more, further preferably 60 mmol/L or more, further preferably 70 mmol/L or more. From the same viewpoint, the content is preferably 1000 mmol/L or less, more preferably 800 mmol/L or less, further preferably 500 mmol/L or less, further preferably 300 mmol/L or less. The content is preferably 30 mmol/L or more and 1000 mmol/L or less, more preferably 50 mmol/L or more and 800 mmol/L or less, further preferably 60 mmol/L or more and 500 mmol/L or less, further preferably 70 mmol/L or more and 300 mmol/L or less.

From the viewpoint of removing the water-soluble support material, the content of the component A' in the treatment agent composition is preferably 0.1 g/100 mL or more, more preferably 0.3 g/100 mL or more, further preferably 0.5 g/100 mL or more, further preferably 0.7 g/100 mL or more. From the same viewpoint, the content is preferably 10 g/100 mL or less, more preferably 8 g/100 mL or less, further preferably 6 g/100 mL or less, further preferably 4 g/100 mL or less. The content is preferably 0.1 g/100 mL or more and 10 g/100 mL or less, more preferably 0.3 g/100 mL or more and 8 g/100 mL or less, further preferably 0.5 g/100 mL or more and 6 g/100 mL or less, further preferably 0.7 g/100 mL or more and 4g/100 mL or less.

[Anionic surfactant (component B)]

From the viewpoint of removing the water-soluble support material while inhibiting damage to the three-dimensional object and discoloration of the three-dimensional object caused by such damage, the treatment agent composition contains the component B. From the same viewpoint, the component B includes an alkyl group having 6 or more and 20 or less carbon atoms, and an acidic group.

From the viewpoint of removing the water-soluble support material while inhibiting damage to the three-dimensional object and discoloration of the three-dimensional object caused by such damage, the number of carbon atoms in the alkyl group included in the component B is 6 or more, preferably 10 or more, preferably 11 or more, more preferably 12 or more. From the viewpoint of removing the water-soluble support material, the number of carbon atoms is 20 or less, preferably 18 or less, more preferably 16 or less, further preferably 14 or less. The number of carbon atoms in the alkyl group included in the component B is 6 or more and 20 or less, preferably 10 or more and 18 or less, more preferably 12 or more and 16 or less, further preferably 12 or more and 14 or less. The alkyl group is, for example, a linear or branched alkyl group. A linear alkyl group is preferable.

From the viewpoint of removing the water-soluble support material while inhibiting damage to the three-dimensional object and discoloration of the three-dimensional object caused by such damage, the acidic group is preferably one or more selected from the group consisting of a carboxy group, a sulfate group, a sulfonate group, and a phosphate group, more preferably one or more selected from the group consisting of a carboxy group and a sulfate group.

Examples of a salt constituting the component B include an alkali metal selected from sodium or potassium; a basic amino acid such as arginine; alkanol ammonium such as monoethanol ammonium, diethanol ammonium, and triethanol ammonium; and ammonium. Among these examples, an alkali metal is preferable from the viewpoint of improving the removability of the support material.

From the viewpoint of removing the water-soluble support material while inhibiting damage to the three-dimensional object and discoloration of the three-dimensional object caused by such damage, the content of the component B in the treatment agent composition is preferably 0.001 g/100 mL or more, more preferably 0.003 g/100 mL or more, further preferably 0.005 g/100 mL or more. From the viewpoint of removing the water-soluble support material, the content is preferably 10 g/100 mL or less, more preferably 5 g/100 mL or less, further preferably 1 g/100 mL or less. The content is preferably 0.001 g/100 mL or more and 10 g/100 mL or less, more preferably 0.003 g/100 mL or more and 5 g/100 mL or less, further preferably 0.005 g/100 mL or more and 1 g/100 mL or less.

From the viewpoint of removing the water-soluble support material while inhibiting damage to the three-dimensional object and discoloration of the three-dimensional object caused by such damage, the content of the component B in the treatment agent composition is, relative to 100 parts by mass of the component A, preferably 0.1 parts by mass or more, more preferably 1 part by mass or more, further preferably 1.5 parts by mass or more. From the viewpoint of removing the water-soluble support material, the content is preferably 10 parts by mass or less, more preferably 6 parts by mass or less, further preferably 3 parts by mass or less. The content is, relative to 100 parts by mass of the component A, preferably 0.1 parts by mass or more and 10 parts by mass or less, more preferably 0.1 parts by mass or more and 6 parts by mass or less, further preferably 1 part by mass or more and 6 parts by mass or less, further preferably 1.5

parts by mass or more and 3 parts by mass or less.

[Water (component C)]

As the component C, industrial water, tap water, deionized water, or the like can be used. From the viewpoint of supply and costs, industrial water is preferable. From the viewpoint of removing the water-soluble support material, deionized water is preferable.

The content of the component C in the treatment agent composition is, at the time of usage, preferably 79 mass% or more and preferably 99.6 mass% or less. When the treatment agent composition does not contain a component other than the components A and B, the content of water in the treatment agent composition is the rest other than the components A and B and counter ions thereof.

[Others]

The treatment agent composition may contain an alkali, a water-soluble solvent, a surfactant other than the component B, a builder component, a thickener, a pH adjuster, a preservative, a rust preventive agent, a pigment, a coloring agent, or the like as needed, as long as the effects of the present invention are not impaired. Depending on the type of the support material, the treatment agent composition containing a coloring agent changes its color when the support material is dissolved, and therefore the coloring agent can be expected to function as an indicator showing the degree of progress and the ending time of the treatment.

[Alkali (component D)]

From the viewpoint of removing the water-soluble support material, the treatment agent composition preferably contains a component D. Examples of the component D include an organic alkali compound and an inorganic alkali. From the viewpoint of removing the water-soluble support material, the component D is preferably an inorganic alkali. Specific examples of the inorganic alkali that can be used include alkali metal hydroxides such as sodium hydroxide and potassium hydroxide, alkali metal silicates such as sodium orthosilicate, sodium metasilicate, and sodium sesquisilicate, alkali metal phosphates such as trisodium phosphate, alkali metal carbonates such as disodium carbonate, sodium hydrogen carbonate, and dipotassium carbonate, and alkali metal borates such as sodium borate . Two or more inorganic alkalis may be combined. From the viewpoint of removing the water-soluble support material, an alkali metal hydroxide is preferable, sodium hydroxide and potassium hydroxide are more preferable, and sodium hydroxide is further preferable. As the component D, at least one compound needs to be used, or two or more compounds can be used in combination.

From the viewpoint of removing the water-soluble support material, the content of the component D in the treatment agent composition is preferably 0.1 mmol/L or more, more preferably 0.5 mmol/L or more, further preferably 1 mmol/L or more, further preferably 3 mmol/L or more. From the same viewpoint, the content is preferably 5000 mmol/L or less, more preferably 1000 mmol/L or less, further preferably 800 mmol/L or less, further preferably 300 mmol/L or less. The content is preferably 0.1 mmol/L or more and 5000 mmol/L or less, more preferably 0.5 mmol/L or more and 1000 mmol/L or less, further preferably 1 mmol/L or more and 800 mmol/L or less, further preferably 3 mmol/L or more and 300 mmol/L or less.

From the viewpoint of removing the water-soluble support material, the treatment agent composition has a pH of preferably 10 or more, more preferably 11 or more, further preferably 12 or more. The treatment agent composition has a pH of preferably 14 or less.

The treatment agent composition can be manufactured by blending the component A' as the origin of the component A, the component B, the component C, and another optional component. When the components A', B, and C, and another optional component are blended, the components A' and C undergo salt exchange, and the treatment agent composition can be manufactured which includes multiple salts different from the components A' and C kept in an equilibrium state.

<Method for manufacturing three-dimensional object>

A method for manufacturing a three-dimensional object according to the present embodiment includes: a modeling step of obtaining a three-dimensional object precursor that includes a three-dimensional object containing a resin, and a water-soluble support material; and a support material removing step of contacting the three-dimensional object precursor with the three-dimensional object precursor treatment agent composition, and thus removing the water-soluble support material. The method for manufacturing a three-dimensional object according to the present embodiment is capable of removing a water-soluble support material while inhibiting damage to a three-dimensional object and discoloration of the three-dimensional object caused by such damage. The reason why the method for manufacturing a three-dimensional object according to the present embodiment exhibits such effects are considered to be the same as the reason why the treatment agent composition exhibits the effects described above.

[Modeling step]

As the modeling step of obtaining a three-dimensional object precursor that includes a three-dimensional object containing a resin, and a water-soluble support material, it is possible to utilize a step of obtaining a three-dimensional object precursor that includes a three-dimensional object and a water-soluble support material in known methods for manufacturing a three-dimensional object with a 3D printer. Examples of a system of the 3D printer used in the known methods for manufacturing a three-dimensional object include an FDM system, an inkjet ultraviolet curing system, a stereolithography system, and a laser sintering system. Among these systems, suitably used is an FDM system, an inkjet ultraviolet curing system, or a stereolithography system, and more suitably used is an FDM system.

As a modeling material, i.e., a material of the three-dimensional object, any resin used as a modeling material in conventional methods for manufacturing a three-dimensional object can be used without particular limitation. Examples of the resin include thermoplastic resins such as an ABS resin, a polylactic acid resin, a polycarbonate resin, 12-nylon, 6,6-nylon, 6-nylon, a polyphenylsulfone resin, polyether ether ketone, and polyetherimide. Among these examples, suitably used is a polycarbonate resin, 12-nylon, 6,6-nylon, 6-nylon, a polyphenylsulfone resin, polyether ether ketone, or polyetherimide. Further suitably used is a resin containing a polycarbonate resin.

A material of the water-soluble support material, i.e., a three-dimensional modeling soluble material, is a resin used as a three-dimensional modeling soluble material in the conventional methods for manufacturing a three-dimensional object. From the viewpoint of improving the removal rate of the water-soluble support material, the support material is preferably an alkaline-water-soluble support material that is soluble in an alkaline aqueous solution, more preferably one or more selected from the group consisting of a (meth)acrylic acid-based copolymer, polyacrylic acid, and sulfopolyester.

The modeling material and the three-dimensional modeling soluble material are preferably discharged by different nozzles.

[Support material removing step]

The support material removing step is a step of contacting the three-dimensional object precursor with the treatment agent composition, and thus removing the water-soluble support material. As a method for contacting the three-dimensional object precursor with the treatment agent composition, considered is soaking the three-dimensional object precursor in a treating liquid, and then stirring the treating liquid, exposing the three-dimensional object precursor to a strong water stream, or moving the precursor itself. From the viewpoint of preventing the precursor from being broken and the viewpoint of facilitating operations, preferred is a method for soaking the three-dimensional object precursor in the treatment agent composition or a method for exposing the three-dimensional object precursor to an appropriate speed water stream. From the viewpoint of improving the removability of the water-soluble support material, the three-dimensional object precursor can be irradiated with ultrasonic waves during the soak to accelerate the dissolution of the water-soluble support material.

From the viewpoint of the solubility of the water-soluble support material, the used amount of the treatment agent composition is preferably 10 mass times or more, more preferably 20 mass times or more the amount of the water-soluble support material. From the viewpoint of the operability, the used amount of the treatment agent composition is preferably 10000 mass times or less, more preferably 5000 mass times or less, further preferably 1000 mass times or less, further preferably 100 mass times or less the amount of the water-soluble support material.

From the viewpoint of the solubility of the water-soluble support material, the temperature of the treatment agent composition in the support material removing step is preferably 25°C or more, more preferably 40°C or more. From the viewpoint of inhibiting the swelling of the water-soluble support material, the temperature of the treatment agent composition in the support material removing step is preferably 80°C or less, more preferably 70°C or less. Comprehensively considering these viewpoints, the temperature of the treatment agent composition in the support material removing step is preferably 25 to 80°C, more preferably 40 to 70°C.

The time for contacting the support material with the treatment agent composition depends on the size of the three-dimensional object precursor, but is usually 2 minutes or more in many cases from the viewpoint of the removability of the water-soluble support material. From the viewpoint of reducing damage on the three-dimensional object, the time for contacting the support material with the treatment agent composition is preferably 2 days or less, more preferably 1 day or less, further preferably 12 hours or less, further preferably 6 hours or less. Comprehensively considering these viewpoints, the time for contacting the water-soluble support material with the treatment agent composition is preferably 2 minutes to 2 days, more preferably 3 minutes to 1 day, further preferably 3 to 12 hours, further preferably 3 to 6 hours.

<Method for removing support material>

A method for removing a support material according to the present embodiment includes contacting, with the three-dimensional object precursor treatment agent composition, the three-dimensional object precursor that includes a three-dimensional object and a water-soluble support material, and thus removing the support material. The method for removing a support material according to the present embodiment is capable of removing a water-soluble support material while inhibiting damage to a three-dimensional object and discoloration of the three-dimensional object caused by such damage. The reason why such effects are exhibited is considered to be the same as the reason why the treatment agent composition exhibits the effects described above. The three-dimensional object precursor is the same as the three-dimensional object in the method for manufacturing a three-dimensional object, and thus the description thereof is omitted. The treatment conditions in the method for removing a support material according to the present embodiment are the same as the treatment conditions described in the support material removing step of the method for manufacturing a three-dimensional object, and thus the description thereof is omitted.

<Method for inhibiting damage to three-dimensional object>

A method for inhibiting damage to a three-dimensional object according to the present embodiment includes a damage inhibiting step of contacting the three-dimensional object with a three-dimensional object damage inhibitor, the three-dimensional object damage inhibitor being the treatment agent composition. The method for inhibiting damage according to the present embodiment is capable of inhibiting damage to a three-dimensional object and discoloration of the three-dimensional object caused by such damage. The reason why such effects are exhibited is considered to be the same as the reason why the treatment agent composition exhibits the effects described above. The three-dimensional object precursor is the same as the three-dimensional object in the method for manufacturing a three-dimensional object, and thus the description thereof is omitted. The treatment conditions in the method for inhibiting damage are the same as the treatment conditions described in the support material removing step of the method for manufacturing a three-dimensional object, and thus the description thereof is omitted.

Regarding the embodiment described above, the present invention further discloses the following composition and the like.

<1> A three-dimensional object precursor treatment agent composition configured to remove a water-soluble support material from a three-dimensional object precursor that includes a three-dimensional object containing a resin, and the water-soluble support material,

the three-dimensional object precursor treatment agent composition containing a compound (component A) represented by Formula (I) below, an anionic surfactant (component B), and water (component C), and
the component B including an alkyl group having 6 or more and 20 or less carbon atoms, and an acidic group.

[Formula 6]

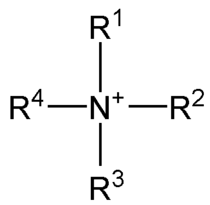

(I)

(In Formula (I), $R^1$, $R^2$, $R^3$, and $R^4$ each independently represent a hydrocarbon group.)

<2> The three-dimensional object precursor treatment agent composition according to <1>, in which the content of the component B in the three-dimensional object precursor treatment agent composition is, relative to 100 parts by mass of the component A, preferably 0.1 parts by mass, more preferably 1 part by mass or more, further preferably 1.5 parts by mass or more.

<3> The three-dimensional object precursor treatment agent composition according to <1> or <2>, in which the content of the component B in the three-dimensional object precursor treatment agent composition is, relative to 100 parts by mass of the component A, preferably 10 parts by mass or less, more preferably 6 parts by mass or less, further preferably 3 parts by mass or less.

<4> The three-dimensional object precursor treatment agent composition according to <1>, in which the content of the component B in the three-dimensional object precursor treatment agent composition is, relative to 100 parts by mass of the component A, preferably 0.1 parts by mass or more and 10 parts by mass or less, more preferably 0.1 parts by mass or more and 6 parts by mass or less, further preferably 1 part by mass or more and 6 parts by mass or less, further preferably 1.5 parts by mass or more and 3 parts by mass or less.

<5> The three-dimensional object precursor treatment agent composition according to any one of <1> to <4>, in which the content of the component B in the three-dimensional object precursor treatment agent composition is preferably 0.001 g/100 mL or more, more preferably 0.003 g/100 mL or more, further preferably 0.005 g/100 mL or more.

<6> The three-dimensional object precursor treatment agent composition according to any one of <1> to <5>, in which the content of the component B in the three-dimensional object precursor treatment agent composition is preferably 10 g/100 mL or less, more preferably 5 g/100 mL or less, further preferably 1 g/100 mL or less.

<7> The three-dimensional object precursor treatment agent composition according to any one of <1> to <4>, in which the content of the component B in the three-dimensional object precursor treatment agent composition is preferably 0.001 g/100 mL or more and 10 g/100 mL or less, more preferably 0.003 g/100 mL or more and 5 g/100 mL or less, further preferably 0.005 g/100 mL or more and 1 g/100 mL or less.

<8> The three-dimensional object precursor treatment agent composition according to any one of <1> to <7>, in which the content of the component A in the three-dimensional object precursor treatment agent composition is preferably 30 mmol/L or more, more preferably 50 mmol/L or more, further preferably 60 mmol/L or more, further preferably 70 mmol/L or more, further preferably 90 mmol/L or more.

<9> The three-dimensional object precursor treatment agent composition according to any one of <1> to <8>, in which the content of the component A in the three-dimensional object precursor treatment agent composition is preferably 1000 mmol/L or less, more preferably 800 mmol/L or less, further preferably 500 mmol/L or less, further preferably 300 mmol/L or less, further preferably 150 mmol/L or less.

<10> The three-dimensional object precursor treatment agent composition according to any one of <1> to <7>, in which the content of the component A in the three-dimensional object precursor treatment agent composition is preferably 30 mmol/L or more and 1000 mmol/L or less, more preferably 50 mmol/L or more and 800 mmol/L or less, further preferably 60 mmol/L or more and 500 mmol/L or less, further preferably 70 mmol/L or more and 300 mmol/L or less, further preferably 90 mmol/L or more and 150 mmol/L or less.

<11> The three-dimensional object precursor treatment agent composition according to any one of <1> to <10>, having a pH of preferably 10 or more, more preferably 11 or more, further preferably 12 or more.

<12> The three-dimensional object precursor treatment agent composition according to any one of <1> to <11>, having a pH of preferably 14 or less.

<13> The three-dimensional object precursor treatment agent composition according to any one of <1> to <12>, in which the acidic group is one or more selected from the group consisting of a carboxy group, a sulfate group, a sulfate group, and a phosphate group.

<14> The three-dimensional object precursor treatment agent composition according to any one of <1> to <13>, in which the resin contains a polycarbonate resin.

<15> The three-dimensional object precursor treatment agent composition according to any one of <1> to <14>, in which the water-soluble support material is preferably an alkaline aqueous solution support material, more preferably one or more selected from the group consisting of a (meth) acrylic acid-based copolymer, a polyacrylic acid, and sulfopolyester.

<16> The three-dimensional object precursor treatment agent composition according to any one of <1> to <15>, in which both $R^1$ and $R^2$ of Formula (I) are an alkyl group.

<17> The three-dimensional object precursor treatment agent composition according to any one of <1> to <16>, in which the total number of carbon atoms in $R^1$ and $R^2$ of Formula (I) is preferably 2 or more.

<18> The three-dimensional object precursor treatment agent composition according to any one of <1> to <17>, in which the total number of carbon atoms in $R^1$ and $R^2$ of Formula (1) is preferably 7 or less, more preferably 6 or less, further preferably 5 or less.

<19> The three-dimensional precursor treatment agent composition according to any one of <1> to <18>, in which $R^3$ and $R^4$ of Formula (I) are each independently a hydrocarbon group having preferably 1 or more and 14 or less carbon atoms, more preferably 1 or more and 12 or less carbon atoms, further preferably 1 or more and 10 or less carbon atoms.

<20> A three-dimensional object precursor treatment agent composition configured to remove a water-soluble support material from a three-dimensional object precursor that includes a three-dimensional object containing a resin, and the water-soluble support material,

the three-dimensional object precursor treatment agent composition containing a compound (component A)

represented by Formula (I) below, an anionic surfactant (component B), and water (component C),
the component B including an alkyl group having 6 or more and 20 or less carbon atoms, and an acidic group,
the content of the component A being 90 mmol/100 mL or more and 150 mmol/100 mL or less,
the content of the component B being 0.1 parts by mass or more and 6 parts by mass or less, relative to 100 parts by mass of the component A, and
the three-dimensional object precursor treatment agent composition having a pH of 12 or more and 14 or less.

[Formula 7]

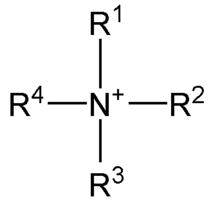

(I)

(In Formula (I), both $R^1$ and $R^2$ are an alkyl group, the total number of carbon atoms in $R^1$ and $R^2$ is 7 or less, and $R^3$ and $R^4$ each independently represent a hydrocarbon group having 1 or more and 14 or less carbon atoms.)

<21> A use of the three-dimensional precursor treatment agent composition according to any one of <1> to <20>, the use being for removing the water-soluble support material.
<22> A method for manufacturing a three-dimensional object, the method including: a modeling step of obtaining a three-dimensional object precursor that includes a three-dimensional object containing a resin, and a water-soluble support material; and a support material removing step of contacting the three-dimensional object precursor with a three-dimensional object precursor treatment agent composition, and thus removing the water-soluble support material,
the three-dimensional object precursor treatment agent composition being the three-dimensional object precursor treatment agent composition according to any one of <1> to <20>.
<23> A method for removing a support material, the method including contacting, with the three-dimensional object precursor treatment agent composition according to any one of <1> to <20>, a three-dimensional object precursor that includes a three-dimensional object containing a resin, and a water-soluble support material, and thus removing the support material.
<24> A method for inhibiting damage to a three-dimensional object, the method including a damage inhibiting step of contacting, with a three-dimensional object damage inhibitor, a three-dimensional object containing a resin,

the three-dimensional object damage inhibitor containing a compound (component A) represented by Formula (I) below, an anionic surfactant (component B), and water (component C), and
the component B including an alkyl group having 6 or more and 20 or less carbon atoms, and an acidic group.

[Formula 8]

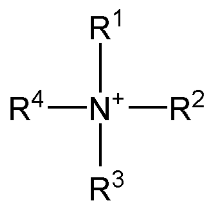

(I)

(In Formula (I), $R^1$, $R^2$, $R^3$, and $R^4$ each independently represent a hydrocarbon group.)

EXAMPLES

Hereinafter, the present invention is described in more detail by way of examples, but is not limited to these examples at all.

<Preparation of three-dimensional object precursor treatment agent composition>

<Examples 1 to 31 and Comparative Examples 1 to 9>

The three-dimensional object precursor treatment agent composition (100 g) in each of Examples 1 to 31 and Comparative Examples 1 to 9 was prepared in a 100-mL screw tube bottle according to the blending amounts shown in Tables 1 to 9. The numerical values of the tables represent the amounts of active ingredients.

[Components]

The following components were used as the components shown in Tables 1 to 9.

· Component A' (compound represented by Formula (II))

Tetraethylammonium hydroxide: manufactured by Tokyo Chemical Industry Co., Ltd., 10% aqueous solution
Tetraethylammonium chloride: manufactured by Tokyo Chemical Industry Co., Ltd.
Tetrapropylammonium hydroxide: manufactured by Tokyo Chemical Industry Co., Ltd., 10% aqueous solution
Benzyltrimethylammonium hydroxide: manufactured by Tokyo Chemical Industry Co., Ltd., 10% aqueous solution
Benzyltriethylammonium hydroxide: manufactured by Tokyo Chemical Industry Co., Ltd., 10% aqueous solution
Benzyltriethylammonium chloride: manufactured by FUJIFILM Wako Pure Chemical Corporation
N,N,N-trimethyl-1-adamantylammonium hydroxide: manufactured by Tokyo Chemical Industry Co., Ltd., 25% aqueous solution
Lauryltrimethylammonium chloride: manufactured by FUJIFILM Wako Pure Chemical Corporation

· Component that is not component A'

Tetrabutylammonium hydroxide: manufactured by FUJIFILM Wako Pure Chemical Corporation, 40% aqueous solution
Hexadecyltrimethylammonium hydroxide: manufactured by Tokyo Chemical Industry Co., Ltd., 10% aqueous solution

· Component B

Sodium laurate: manufactured by FUJIFILM Wako Pure Chemical Corporation
Sodium myristate: manufactured by FUJIFILM Wako Pure Chemical Corporation
Sodium decyl sulfate: manufactured by Tokyo Chemical Industry Co., Ltd.
Sodium lauryl sulfate: manufactured by FUJIFILM Wako Pure Chemical Corporation
Triethanolamine lauryl sulfate: manufactured by FUJIFILM Wako Pure Chemical Corporation, 40% aqueous solution
Sodium tetradecyl sulfate: manufactured by FUJIFILM Wako Pure Chemical Corporation
Sodium hexadecyl sulfate: manufactured by FUJIFILM Wako Pure Chemical Corporation
Sodium octadecyl sulfate (C16, 60% contained): manufactured by Tokyo Chemical Industry Co., Ltd.
Sodium polyoxyethylene (3) lauryl ether sulfate: manufactured by Kao Corporation, EMAL 20C, 25% aqueous solution
Sodium dodecylbenzene sulfonate (soft type): manufactured by Kao Corporation, NEOPELEX G-25, 25% aqueous solution
Sodium n-octyl sulfate: manufactured by FUJIFILM Wako Pure Chemical Corporation
Sodium 2-ethylhexyl sulfate: manufactured by FUJIFILM Wako Pure Chemical Corporation, 40% aqueous solution
Sodium decanoate: manufactured by Tokyo Chemical Industry Co., Ltd.
Potassium polyoxyethylene (3) lauryl ether phosphate salt

· Component that is not component B

Hexadecyltrimethylammonium chloride: manufactured by Tokyo Chemical Industry Co., Ltd.
Sodium hexanoate: manufactured by Tokyo Chemical Industry Co., Ltd.

· Component C

Deionized water: pure water with 1 μS/cm or less manufactured by water purifier G-10DSTSET manufactured by ORGANO CORPORATION

· Component D (inorganic alkali)

Sodium hydroxide: manufactured by KANTO CHEMICAL CO. , INC., 48% aqueous solution
Sodium carbonate: manufactured by FUJIFILM Wako Pure Chemical Corporation
Sodium orthosilicate: manufactured by NACALAI TESQUE, INC.

<Evaluation method>

[pH measurement]

The pH of the three-dimensional object precursor treatment agent composition at 25°C was measured by soaking an electrode of a pH meter (DKK-TOA CORPORATION, HM-30G) in the three-dimensional object precursor treatment agent composition, and the numerical value 3 minutes after the soak was employed.

[Evaluation of effect of inhibiting discoloration]

(Preparation of evaluation samples)

FDM modeling material PC-ABS (polycarbonate and ABS resin) manufactured by Stratasys Ltd. was cut into about 5 cm pieces. The cut modeling material pieces were each put into 100-ml screw tubes (screw tubes No. 8 manufactured by Maruemu Corporation), and into the screw tubes were further put 100 ml of the treatment agent composition samples prepared in the blending ratios of the examples and the comparative examples shown in Tables 1 to 8. The screw tubes each having the modeling material and the treatment agent composition sample put therein were covered with a lid, put in VACUUM DRYING OVEN VO-420 (manufactured by ADVANTEC TOYO KAISHA, LTD.) having the setting temperature thereof increased to 70°C, and left to stand still for 24 hours. After 24 hours, the modeling materials were taken out from the screw tubes, washed with flowing water, and air-dried for 12 hours. Evaluation samples for the examples and the comparative examples were thus obtained.

[Evaluation procedure]

The evaluation samples were measured for L*, a*, and b* using chromometer CR-400 manufactured by KONICA MINOLTA, INC. and evaluated for the discoloration by calculating ΔL*ab according to the equation below. An untreated modeling material (PC-ABS) was used as a blank.

$$\Delta L^{*}ab = ((\Delta L^{*})^{2} + (\Delta a^{*})^{2} + (\Delta b^{*})^{2})^{1/2}$$

[Evaluation of removability of support material]

<Examples 1 to 29 and Comparative Examples 1 to 7>

(Preparation of evaluation samples and evaluation procedure)

FDM support material SR-30 (alkaline-water-soluble) manufactured by Stratasys Ltd. was cut into about 6 cm

pieces, and 1 g of the cut support material pieces was weighed out. For adjustment of the weight to 1 g, the support material pieces were further cut as appropriate.

A polypropylene container (volume 27 L) manufactured by AS ONE CORPORATION was placed on MAGNETIC STIRRER REMIX RS-6DN manufactured by AS ONE CORPORATION, water was charged into the container and heated to 60°C with THERMAL ROBO TR-2$\alpha$ manufactured by AS ONE CORPORATION, and then kept in this state. Into the container were put 100-ml screw tubes (screw tubes No. 8 manufactured by Maruemu Corporation) including the treatment agent composition samples prepared in the blending ratios of the examples and the comparative examples shown in Tables 1 to 7, and a 3-cm diameter stirrer piece. The samples were stirred at 500 rpm for 30 minutes and then the cut support material pieces (1 g) were put in the screw tubes under stirring. Three minutes later, the support material that remained unsolved was filtered out with a 250-mesh metal net and dried at a reduced pressure of 10 kPa for 24 hours in VACUUM DRYING OVEN VO-420 (manufactured by ADVANTEC TOYO KAISHA, LTD.) having the setting temperature thereof increased to 60°C. After the drying, the support material in each of the examples and the comparative examples was weighed. The removal rate was calculated by the equation below and used for the evaluation of the removability of the support material.

$$\text{Removal rate (mg/min)} = (1 - \text{weight (g) of dried support material}/3 \times 1000$$

(Evaluation of swelling rate of support material)

A water-soluble support material is removed in a water-based composition by the dissolution and the swelling of the support material that are progressed in parallel. When the swelling is preferentially progressed, water enough for dissolving the support material in water does not permeate the support material and the removal is sometimes thereby not progressed smoothly. Therefore, the support material was evaluated for the swelling rate by evaluating the removability of the support material in the soaking time longer than the soaking time applied for the evaluation of the removability of the support material. That is, the evaluation was performed under the same conditions as in the evaluation of the removability of the support material except that the amount of the support material was changed from 1 g to 3 g and the soaking time in the screw tube was changed from 3 minutes to 2 hours. The removal rate was calculated by the equation below and used for the evaluation of the swelling rate of the support material.

$$\text{Removal rate (mg/min)} = (3 - \text{weight (g) of dried support material}/120 \times 1000$$

Tables 1 to 7 shows the evaluation results.

[Table 1]

| | Example 1 | | Example 2 | | Example 3 | | Example 4 | | Example 5 | | Example 6 | | Example 7 | |
|---|---|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml |
| Tetraethylammonium hydroxide | 115 | 1.69 | | | | | | | | | | | | |
| Tetrapropylammonium hydroxide | | | 115 | 2.34 | | | | | | | | | | |
| Benzyltrimethylammonium hydroxide | | | | | 120 | 1. 92 | | | | | | | | |
| Benzyltriethylammonium hydroxide | | | | | | | 120 | 2.41 | | | | | | |
| N,N,N-trimethyl-1-adamantylammonium hydroxide | | | | | | | | | 120 | 2.54 | | | | |
| Tetrabutylammonium hydroxide | | | | | | | | | | | 115 | 2.98 | | |
| Hexadecyltrimethylammonium hydroxide | | | | | | | | | | | | | 120 | 3.61 |
| Sodium lauryl sulfate | | 0.03 | | 0.03 | | 0.03 | | 0.03 | | 0.03 | | 0.03 | | 0.03 |
| Deionized water | | 98.28 | | 97.63 | | 98.05 | | 97.56 | | 97.43 | | 99.97 | | 99.97 |
| ΔL*ab | 0.60 | | 0.55 | | 0.57 | | 0.63 | | 0.88 | | 3.37 | | 5.30 | |
| Removal rate (mg/min) | 200 | | 223.3 | | 216.7 | | 240 | | 200 | | 206.7 | | Not evaluated | |
| Swelling rate (mg/min) | 10.9 | | 10.6 | | 12.7 | | 11.1 | | Not evaluated | | 11.7 | | Not evaluated | |
| pH | 13.21 | | 13.2 | | 13.22 | | 13.24 | | 13.23 | | 13.22 | | Not evaluated | |

[Table 2]

| | Comparative Example 1 | | Comparative Example 2 | | Comparative Example 3 | | Comparative Example 4 | | Comparative Example 5 | |
|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml |
| Tetrapropylammonium hydroxide | | | 115 | 2.34 | | | | | | |
| Benzyltrimethylammonium hydroxide | | | | | 120 | 1.92 | | | | |
| Benzyltriethylammonium hydroxide | | | | | | | 120 | 2.41 | | |
| N,N,N-trimethyl-1-adamantylammonium hydroxide | | | | | | | | | 120 | 2.54 |
| Tetrabutylammonium hydroxide | 115 | 2.98 | | | | | | | | |
| Hexadecyltrimethylammonium hydroxide | | | | | | | | | | |
| Sodium lauryl sulfate | | | | | | | | | | |
| Deionized water | | 97.02 | | 97.66 | | 98.08 | | 97.59 | | 97.46 |
| ΔL*ab | 4.90 | | 3.87 | | 3.54 | | 4.23 | | 4.13 | |
| Removal rate (mg/min) | 206.7 | | 220 | | 220 | | 236.7 | | 190 | |
| Swelling rate (mg/min) | 11.4 | | 11.3 | | 12.7 | | 11.1 | | Not evaluated | |
| pH | 13.23 | | 13.20 | | 13.21 | | 13.25 | | 13.23 | |

[Table 3]

| | Example 8 | | Example 9 | | Example 10 | | Example 11 | | Example 12 | | Example 13 | | Example 14 | | Example 15 | | Example 16 | | Example 17 | | Example 18 | |
|---|---|---|---|---|---|---|---|---|---|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml |
| Benzyltri-methyl-ammoni-um hydrox-ide | 120 | 1.92 | 120 | 1.92 | 120 | 1.92 | 120 | 1.92 | 120 | 1.92 | 120 | 1.92 | 120 | 1.92 | 120 | 1.92 | 120 | 1.92 | 120 | 1.92 | 120 | 1.92 |
| Sodium laurate | | 0.10 | | | | | | | | | | | | | | | | | | | | |
| Sodium myristate | | | | 0.10 | | | | | | | | | | | | | | | | | | |
| Sodium decyl sulfate | | | | | | | | | | | | | | | | | | | | | | 0.10 |
| Sodium lauryl sul-fate | | | | | | 0.10 | | | | | | | | | | | | | | | | |
| Trieth-anolamin e lauryl sulfate | | | | | | | | 0.10 | | | | | | | | | | | | | | |
| Sodium tetradecyl sulfate | | | | | | | | | | 0.10 | | | | | | | | | | | | |
| Sodium hexade-cyl sulfate | | | | | | | | | | | | 0.10 | | | | | | | | | | |

(continued)

| | Example 8 | | Example 9 | | Example 10 | | Example 11 | | Example 12 | | Example 13 | | Example 14 | | Example 15 | | Example 16 | | Example 17 | | Example 18 | |
|---|---|---|---|---|---|---|---|---|---|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml |
| Sodium octadecylsulfate (C16, 60% contained) | | | | | | | | | | | | | | 0.10 | | | | | | | | |
| Sodium polyoxyethylene (3) lauryl ether sulfate | | | | | | | | | | | | | | | | 0.10 | | | | | | |
| Sodium dodecylbenzene sulfonate | | | | | | | | | | | | | | | | | | 0.10 | | | | |
| Potassium polyoxyethylene (3) lauryl ether phosphate salt | | | | | | | | | | | | | | | | | | | | 0.10 | | |
| Deionized water | | 97.98 | | 97.98 | | 97.98 | | 97.98 | | 97.98 | | 97.98 | | 97.98 | | 97.98 | | 97.98 | | 97.98 | | 97.98 |
| ΔL*ab | 0.60 | | 0.57 | | 0.73 | | 0.62 | | 0.79 | | 1.15 | | 1.01 | | 0.77 | | 1.06 | | 0.98 | | 0.98 | |

(continued)

| | Example 8 | | Example 9 | | Example 10 | | Example 11 | | Example 12 | | Example 13 | | Example 14 | | Example 15 | | Example 16 | | Example 17 | | Example 18 | |
|---|---|---|---|---|---|---|---|---|---|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml |
| Removal rate (mg/min) | 223 | | 217 | | 217 | | 223 | | 217 | | 223 | | 220 | | 217 | | 220 | | 223 | | 223 | |
| pH | 13.2 | | 13.2 | | 13.2 | | 13.2 | | 13.2 | | 13.2 | | 13.2 | | 13.2 | | 13.2 | | 13.2 | | 13.2 | |

[Table 4]

| | Example 19 | | Example 20 | | Example 21 | | Comparative Example 6 | | Comparative Example 7 | | Comparative Example 3 | |
|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml |
| Benzyltrimethylammonium hydroxide | 120 | 1. 92 | 120 | 1. 92 | 120 | 1. 92 | 120 | 1. 92 | 120 | 1. 92 | 120 | 1.92 |
| Hexadecyltrimethylammonium chloride | | | | | | | | 0.10 | | | | |
| Sodium decanoate | | | | | | 0.10 | | | | | | |
| Sodium hexanoate | | | | | | | | | | 0.10 | | |
| Sodium n-octyl sulfate | | 0.10 | | | | | | | | | | |
| Sodium 2-ethylhexyl sulfate | | | | 0.10 | | | | | | | | |
| Deionized water | | 97 . 98 | | 97 . 98 | | 97 . 98 | | 97 . 98 | | 97 . 98 | | 98.08 |
| ΔL*ab | 1.73 | | 2.04 | | 2.42 | | 4.81 | | 3.76 | | 3.54 | |
| Removal rate (mg/min) | 214 | | 226 | | 223 | | 223 | | 223 | | 220 | |
| pH | 13.21 | | 13.19 | | 13.18 | | 13.21 | | 13.17 | | 13.16 | |

[Table 5]

| | Example 22 | | Example 23 | | Example 24 | | Example 3 | | Example 25 | | Example 10 | | Comparative Example 3 | |
|---|---|---|---|---|---|---|---|---|---|---|---|---|---|---|
| | mmol/L | g/100 ml | mmol/L | g/100 ml | mmol/L | g/100 ml | mmol/L | g/100 ml | mmol/L | g/100 ml | mmol/L | g/100 ml | mmol/L | g/100 ml |
| Benzyltrimethylammonium hydroxide | 120 | 1.92 | 120 | 1.92 | 120 | 1.92 | 120 | 1.92 | 120 | 1.92 | 120 | 1.92 | 120 | 1.92 |
| Sodium lauryl sulfate | | 0.005 | | 0.01 | | 0.02 | | 0.03 | | 0.05 | | 0.10 | | |
| Deionized water | | 98.07 | | 98.07 | | 98.06 | | 98.05 | | 98.03 | | 97.98 | | 98.08 |
| ΔL*ab | 0.67 | | 0.77 | | 0.55 | | 0.57 | | 0.50 | | 0.73 | | 3.54 | |
| Removal rate (mg/min) | 220 | | 223 | | 223 | | 217 | | 217 | | 217 | | 220 | |
| Swelling rate (mg/min) | 13.0 | | 12.7 | | 12.1 | | 12.7 | | 12.8 | | 13.2 | | 12.7 | |
| pH | 13.17 | | 13.16 | | 13.16 | | 13.15 | | 13.14 | | 13.2 | | 13.21 | |

[Table 6]

| | Example 26 | | Example 27 | |
|---|---|---|---|---|
| | mmol/L | g/100 ml | mmol/L | g/100 ml |
| Tetraethylammonium chloride | 115 | 1.69 | | |
| Benzyltriethylammonium chloride | | | 120 | 2.73 |
| Sodium hydroxide | 127 | 0.51 | 132 | 0.53 |
| Sodium lauryl sulfate | | 0.03 | | 0.03 |
| Deionized water | | 97.77 | | 96.71 |
| ΔL*ab | 0.37 | | 0.42 | |
| Removal rate (mg/min) | 143 | | 123 | |
| pH | 13.38 | | 13.34 | |

[Table 7]

| | Example 27 | | Example 28 | | Example 29 | |
|---|---|---|---|---|---|---|
| | mmol/L | g/100 ml | mmol/L | g/100 ml | mmol/L | g/100 ml |
| Benzyltriethylammonium chloride | 120 | 2.73 | 120 | 2.73 | 120 | 2.73 |
| Sodium hydroxide | 132 | 0.53 | | | | |
| Sodium carbonate | | | 132 | 1.40 | | |
| Sodium orthosilicate | | | | | 132 | 2.43 |
| Sodium lauryl sulfate | | 0.03 | | 0.03 | | 0.03 |
| Deionized water | | 96.71 | | 95.84 | | 94.81 |
| ΔL*ab | 0.42 | | 0.19 | | 0.77 | |
| Removal rate (mg/min) | 123 | | 63 | | 73 | |
| pH | 13.34 | | 11.70 | | 13.40 | |

<Example 30 and Comparative Example 8>

[Preparation of support material]

(Synthesis of polyester resin)

Into a stainless steel reactor (equipped with a stirrer and a nitrogen inlet tube) were charged 4.09 parts by mass of dimethyl 2,6-naphthalenedicarboxylate (manufactured by BP plc), 3.20 parts by mass of ethylene glycol (manufactured by Wako Pure Chemical Industries, Ltd., guaranteed), 1.69 parts by mass of sodium dimethyl 5-sulfoisophthalate (TAKEMOTO OIL & FAT Co., Ltd.), 0.00171 parts by mass of titanium tetrabutoxide (Tokyo Chemical Industry Co., Ltd.), and 0.042 parts by mass of sodium acetate trihydrate (manufactured by Wako Pure Chemical Industries, Ltd., guaranteed). The mixture was heated to 230°C over 1.5 hours under normal pressure and in a nitrogen atmosphere and was heated at 230°C for 360 minutes to perform a transesterification reaction. An 85% aqueous solution of phosphoric acid (manufactured by Sigma-Aldrich Japan, guaranteed) in an amount of 0.000637 parts by mass was added, the mixture was stirred for 10 minutes, then heated to 260°C over 150 minutes, and simultaneously stirred while the pressure was reduced to 30 mmHg to perform polycondensation. A light-brown white solid (room temperature) polyester resin was thus obtained.

(Preparation of three-dimensional modeling soluble material)

The polyester resin in an amount of 81.6 parts by mass, 10.2 parts by mass of KURARITY LA2250 (manufactured

by Kuraray Co., Ltd., thermoplastic elastomer, methyl polymethacrylate-butyl polyacrylate-methyl polymethacrylate triblock copolymer), 4.1 parts by mass of Bondfast (registered trade name) 7B (manufactured by SUMITOMO CHEMICAL COMPANY, LIMITED, ethylene-vinyl acetate-glycidyl methacrylate copolymer) as a compatibilizing agent, and 4.1 parts by mass of ELECUT S-418 (TAKEMOTO OIL & FAT Co., Ltd., organic salt: tetrabutylphosphonium dodecylbenzene sulfonate salt) were dried at 60°C under reduced pressure and then melt-kneaded at 230°C and 90 r/min for 10 minutes using a melt kneader (manufactured by Toyo Seiki Seisaku-sho, Ltd., Labo Plastmill 4C150). A three-dimensional modeling soluble material was thus obtained.

(Manufacture of filaments)

Sample pieces obtained by crushing the three-dimensional modeling soluble material were extruded from a 2.0-mm diametrical and 10-mm long capillary at a melt temperature of 180°C and an extrusion rate of 10 mm/min using Capilograph 1D (manufactured by Toyo Seiki Seisaku-sho, Ltd.), and the extruded tip was held with tweezers and manually and lightly pulled to process into a filament having a diameter of 1.7 mm. The filament was used as an evaluation support material for Example 30 and Comparative Example 8.

(Preparation of evaluation samples)

Evaluation samples for Example 30 and Comparative Example 8 were obtained in the same manner as in Examples 1 to 29 and Comparative Examples 1 to 7 except that in place of FDM support material SR-30 (alkaline-water-soluble) manufactured by Stratasys Ltd., the evaluation support material for Example 30 and Comparative Example 8 was used.

(Evaluation of swelling rate of support material)

The evaluation samples for Example 30 and Comparative Example 8 were evaluated for the swelling rate by performing the same operations as in Examples 1 to 29 and Comparative Examples 1 to 7 except that in place of FDM support material SR-30 (alkaline-water-soluble) manufactured by Stratasys Ltd., the evaluation samples were used. Table 8 shows the evaluation results.

[Table 8]

| | Example 30 | | Comparative Example 8 | |
|---|---|---|---|---|
| | mmol/L | g/100 ml | mmol/L | g/100 ml |
| Tetraethylammonium bromide | 118.8 | 2.52 | 118.8 | 2.52 |
| Sodium hydroxide | 80 | 0.32 | 80 | 0.32 |
| Sodium lauryl sulfate | | 0.03 | | |
| Deionized water | | 97.13 | | 97.16 |
| ΔL*ab | 0.75 | | 4.19 | |
| Removal rate (mg/min) | 186.7 | | 180.1 | |
| pH | 13.5 | | 13.5 | |

[Example 31 and Comparative Example 9]

[Evaluation of effect of inhibiting damage]

As a modeling material, a polycarbonate resin plate (manufactured by Taiyukizai Co., LTD., length 70 mm, width 18 mm, thickness 2 mm) was precisely weighed and put into 100-ml polypropylene bottles (manufactured by NIKKO HANSEN & CO., LTD., JP-100), and the treatment agent composition samples (100 g) prepared in the blending ratios shown in Table 9 were added into the polypropylene bottles. The polypropylene bottles each having the polycarbonate resin plate and the treatment agent composition sample put therein were covered with a lid, put in VACUUM DRYING OVEN VO-420 (manufactured by ADVANTEC TOYO KAISHA, LTD.) having the setting temperature thereof increased to 60°C, and left to stand still for 1 week under normal pressure. Thereafter, the polycarbonate resin plate was taken out from each of the polypropylene bottles, washed with flowing water, dried at 60°C under reduced pressure

for 12 hours, then precisely weighed. The change in the mass was obtained by the equation below and used for the evaluation of damage to a three-dimensional object. Table 9 shows the evaluation results.

$$\text{Change rate \% in mass of polycarbonate resin plate} = (\text{initial mass of polycarbonate resin plane} - \text{mass of polycarbonate resin plate having been soaked and dried})/\text{initial mass of polycarbonate resin plate} \times 100$$

[Table 9]

| | Example 31 | | Comparative Example 9 | |
|---|---|---|---|---|
| | mmol/L | g/100 ml | mmol/L | g/100 ml |
| Tetraethylammonium hydroxide | 120 | 1.77 | 120 | 1.77 |
| Sodium hydroxide | 150 | 0.6 | 150 | 0.6 |
| Sodium dodecyl sulfate | 1.04 | 0.03 | 0 | 0 |
| Deionized water | | 97.6 | 0 | 97.6 |
| Change (%) in mass of polycarbonate resin plate | -0.3 | | -1.87 | |
| pH | 13.35 | | 13.34 | |

As is clear from the results shown in Tables 1 to 8, the three-dimensional object precursor treatment agent compositions according to the examples have an excellent effect of inhibiting discoloration of a three-dimensional object caused by damage thereto, whereas the treatment agent compositions according to the comparative examples have a poor effect of inhibiting discoloration and are understood not to have attained the object of the present invention. It is understood from the results shown in Tables 1, 2, and 5 that the treatment agent compositions are, for example, high in the removal rate but low in the swelling rate, or low in both the removal rate and the swelling rate, and therefore the compositions that give the support material excellent swelling properties (removability in the long-time soak) cannot always be said to provide excellent removability.

Example 2 and Comparative Example 2, Example 3 and Comparative Example 3, and Example 4 and Comparative Example 4 in Tables 1 and 2 are combinations in which the example and the comparative example are common in containing the compound (component A) represented by Formula (I) but different in the presence or absence of the anionic surfactant (component B) . By the comparison between the example and the comparative example in each of these combinations, it is understood that the presence or absence of the component B gives no big difference to the removal rate and the swelling rate, but gives a big difference to the effect of inhibiting discoloration.

As is clear from the results shown in Table 9, the three-dimensional object precursor treatment agent composition according to Example 31 has an excellent effect of inhibiting damage, whereas the treatment agent composition according to Comparative Example 9 has a poor effect of inhibiting damage and is understood not to have attained the object of the present invention.

## Claims

**1.** A three-dimensional object precursor treatment agent composition configured to remove a water-soluble support material from a three-dimensional object precursor that includes a three-dimensional object containing a resin, and the water-soluble support material,

the three-dimensional object precursor treatment agent composition comprising a compound (component A) represented by Formula (I) below, an anionic surfactant (component B), and water (component C), and
the component B including an alkyl group having 6 or more and 20 or less carbon atoms, and an acidic group,

[Formula 1]

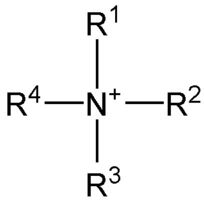 (I)

wherein $R^1$, $R^2$, $R^3$, and $R^4$ each independently represent a hydrocarbon group.

**2.** The three-dimensional object precursor treatment agent composition according to claim 1, wherein a content of the component B in the three-dimensional object precursor treatment agent composition is 0.1 parts by mass or more and 10 parts by mass or less, relative to 100 parts by mass of the component A.

**3.** The three-dimensional object precursor treatment agent composition according to claim 1 or 2, wherein the content of the component B in the three-dimensional object precursor treatment agent composition is 0.001 g/100 mL or more and 10 g/100 mL or less.

**4.** The three-dimensional object precursor treatment agent composition according to any one of claims 1 to 3, wherein a content of the component A in the three-dimensional object precursor treatment agent composition is 30 mmol/100 mL or more and 1000 mmol/100 mL or less.

**5.** The three-dimensional object precursor treatment agent composition according to any one of claims 1 to 4, having a pH of 10 or more.

**6.** The three-dimensional object precursor treatment agent composition according to any one of claims 1 to 5, wherein the acidic group is one or more selected from the group consisting of a carboxy group, a sulfate group, a sulfonate group, and a phosphate group.

**7.** The three-dimensional object precursor treatment agent composition according to any one of claims 1 to 6, wherein the resin contains a polycarbonate resin.

**8.** The three-dimensional object precursor treatment agent composition according to any one of claims 1 to 7, wherein the water-soluble support material is soluble in an alkaline aqueous solution.

**9.** The three-dimensional object precursor treatment agent composition according to any one of claims 1 to 8, wherein both $R^1$ and $R^2$ of Formula (I) are an alkyl group.

**10.** The three-dimensional object precursor treatment agent composition according to any one of claims 1 to 9, wherein a total number of carbon atoms in $R^1$ and $R^2$ of Formula (I) is 7 or less.

**11.** The three-dimensional precursor treatment agent composition according to any one of claims 1 to 10, wherein $R^3$ and $R^4$ of Formula (I) are each independently a hydrocarbon group having 1 or more and 14 or less carbon atoms.

**12.** A method for manufacturing a three-dimensional object, the method comprising:

a modeling step of obtaining a three-dimensional object precursor that includes a three-dimensional object containing a resin, and a water-soluble support material; and
a support material removing step of contacting the three-dimensional object precursor with a three-dimensional object precursor treatment agent composition, and thus removing the water-soluble support material,
the three-dimensional object precursor treatment agent composition being the three-dimensional object precursor treatment agent composition according to any one of claims 1 to 11.

**13.** A method for removing a support material, the method comprising contacting, with the three-dimensional object precursor treatment agent composition according to any one of claims 1 to 11, a three-dimensional object precursor that includes a three-dimensional object containing a resin, and a water-soluble support material, and thus removing

the support material.

**14.** A method for inhibiting damage to a three-dimensional object, the method comprising a damage inhibiting step of contacting, with a three-dimensional object damage inhibitor, a three-dimensional object containing a resin,

the three-dimensional object damage inhibitor containing a compound (component A) represented by Formula (I), an anionic surfactant (component B), and water (component C), and
the component B including an alkyl group having 6 or more and 20 or less carbon atoms, and an acidic group,

[Formula 2]

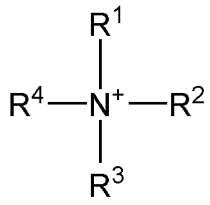

(I)

wherein $R^1$, $R^2$, $R^3$, and $R^4$ each independently represent a hydrocarbon group.

| INTERNATIONAL SEARCH REPORT | International application No. PCT/JP2021/024672 |
|---|---|

**A. CLASSIFICATION OF SUBJECT MATTER**
B29C 64/40(2017.01)i; B33Y 70/00(2020.01)i
FI: B29C64/40; B33Y70/00

According to International Patent Classification (IPC) or to both national classification and IPC

**B. FIELDS SEARCHED**

Minimum documentation searched (classification system followed by classification symbols)
B29C64/40; B33Y70/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/110935 A1 (KAO CORP.) 04 June 2020 (2020-06-04) paragraphs [0004]-[0006], [0016]-[0047] | 1-14 |
| Y | JP 2019-116049 A (NICCA CHEMICAL CO., LTD.) 18 July 2019 (2019-07-18) paragraphs [0024], [0026] | 1-14 |
| A | WO 2017/199324 A1 (KAO CORP.) 23 November 2017 (2017-11-23) paragraphs [0007]-[0073] | 1-14 |
| A | JP 2018-176469 A (KAO CORP.) 15 November 2018 (2018-11-15) paragraphs [0007]-[0055] | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 August 2021 (31.08.2021) | 07 September 2021 (07.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/024672

| Patent Documents referred in the Report | Publication Date | Patent Family | Publication Date |
|---|---|---|---|
| WO 2020/110935 A1 | 04 Jun. 2020 | (Family: none) | |
| JP 2019-116049 A | 18 Jul. 2019 | EP 3505323 A1<br>paragraphs [0042], [0046] | |
| WO 2017/199324 A1 | 23 Nov. 2017 | US 2019/0185634 A1<br>paragraphs [0007]-[0102]<br>EP 3459717 A1<br>CN 109153187 A | |
| JP 2018-176469 A | 15 Nov. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020082519 A
- JP 2019116049 A